**Europäisches Patentamt**

**European Patent Office**

**Office européen des brevets**

(19)

(11) Veröffentlichungsnummer: **0 108 834**
**B1**

(12)

# EUROPÄISCHE PATENTSCHRIFT

(45) Veröffentlichungstag der Patentschrift:
04.06.86

(51) Int. Cl.⁴: **C 01 B 3/00, F 25 J 1/02**

(21) Anmeldenummer: **82110748.9**

(22) Anmeldetag: **20.11.82**

---

(54) **Vorrichtung zum Herstellen von flüssigem Para-Wasserstoff.**

---

(30) Priorität: **20.10.82 CH 6107/82**

(43) Veröffentlichungstag der Anmeldung:
**23.05.84 Patentblatt 84/21**

(45) Bekanntmachung des Hinweises auf die Patenterteilung:
**04.06.86 Patentblatt 86/23**

(84) Benannte Vertragsstaaten:
**CH DE FR GB IT LI NL**

(56) Entgegenhaltungen:
**CH - A - 471 975**
**US - A - 3 094 390**
**US - A - 3 733 838**

**JAPANESE PATENTS GAZETTE, Teil 1, Woche X32, Seite 4, Nr. 60621, publiziert zwischen 20. und 26. Juni 1976 (nicht-voruntersuchte Anmeldungen), Derwent Publications Ltd., London, GB;**

(73) Patentinhaber: **GEBRÜDER SULZER AKTIENGESELLSCHAFT, Zürcherstrasse 9, CH-8401 Winterthur (CH)**

(72) Erfinder: **Kündig, Andres, Goethestrasse 5 A, CH-8712 Stäfa (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

---

## Beschreibung

Die Erfindung betrifft eine Vorrichtung zum Herstellen von flüssigem Para-Wasserstoff, mit einem Kompressor zum Komprimieren von Normal-Wasserstoffgas, Kühlmitteln zum Kühlen des komprimierten Wasserstoffgases, Katalysatoren zur Umwandlung des Normal-Wasserstoffes in Para-Wasserstoff, einer Entspannungsvorrichtung zum mindestens teilweise Verflüssigen des gekühlten Wasserstoffgases, sowie Kühlmitteln zum Verflüssigen des verbliebenen Wasserstoffdampfes, und einem Behälter für den flüssigen Wasserstoff.

Um die Temperatur von dem flüssigen Wasserstoff im Behälter konstant zu halten, muss der Dampf, der durch Wärmeeinfall von draussen in dem Behälter entsteht, abgesaugt werden. Die einfachste Lösung (US-PS 3 094 390) ist, diesen Dampf vom Kompressor ansaugen zu lassen und dem zu verflüssigenden Normal-Wasserstoff beizumischen und zusammen mit diesem erneut zu verflüssigen. Der Nachteil dieser Lösung besteht darin, dass der Wirkungsgrad niedrig ist. Der Grund dafür ist, dass für die Umwandlung in Para-Wasserstoff eine erhebliche Kälteleistung erforderlich ist. Diese Kälteleistung muss zusätzlich zu der für die Abkühlung des Wasserstoffs erforderlichen Kälteleistung aufgebracht werden. Beim Zurückströmen des Para-Wasserstoffes durch den Wärmeaustauscher zum Kompressor im Gegenstrom mit dem Hochdruckgas, steht die für die Umwandlung aufgewendete Kälteleistung jedoch nicht zur Abkühlung des Hochdruckgases zur Verfügung. Denn die Zurückverwandlung des Para-Wasserstoffes in Normal-Wasserstoff, bei der die bei tiefer Temperatur ans Kältemittel abgegebene Wärmemenge wieder aufgenommen wird, findet erst bei Raumtemperatur statt. Es geht somit fortwährend Kälteleistung verloren.

Die Vorrichtung der eingang definierten Art brachte Verbesserung. Bei dieser Vorrichtung ist nach der Entspannungsvorrichtung in Form eines Drosselventils ein weiterer Wärmeaustauscher angebracht, in dem der nach der Entspannung verbliebene Wasserstoffdampf kondensiert und so weit unterkühlt wird, dass der flüssige Wasserstoff das Entstehen von Wasserstoffdampf durch Wärmeeinfall in den Behälter verhindern kann. Der Nachteil dieser Lösung ist jedoch, dass viel Kälteleistung auf einem tiefen Temperaturniveau erbracht werden muss, was wiederum ein erheblicher Energieaufwand bedeutet. Ein weiterer Nachteil besteht darin, dass der Druck im Behälter nur durch Regelung der Kälteleistung des weiteren Wärmeaustauschers konstant gehalten werden kann.

Der Erfindung liegt die Aufgabe zugrunde, eine Vorrichtung der eingangs definierten Art zu schaffen, die eine geringere Kälteleistung für die bekannte Vorrichtung erfordert. Diese Aufgabe wird gemäss der Erfindung durch die im Kennzeichen des unabhängigen Patentanspruchs 1 angegebenen Merkmale gelöst. Der Unteranspruch definiert eine vorteilhafte Weiterbildung.

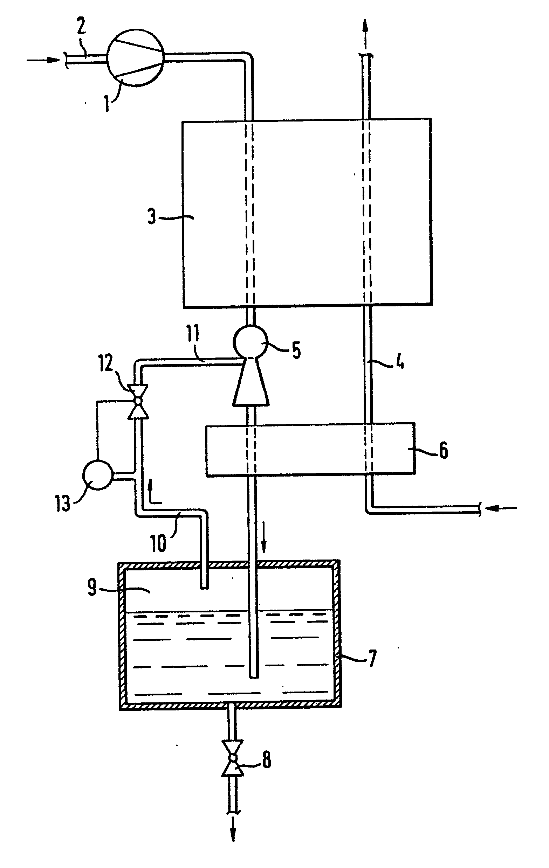

Zwar offenbart die CH-PS 3 733 938, Fig. 2, auch einen Ejektor zum Absaugen von Dampf aus dem Gasraum eines Flüssiggasbehälters, dieser Ejektor arbeitet aber nur als Pumpe, nicht als Entspannungsvorrichtung zum Rückverflüssigen des Dampfes. Die Rückverflüssigung findet anschliessend in einem Wärmeaustauscher und einem diesem folgenden Expansionsventil statt.

Ein Ausführungsbeispiel des Erfindungsgegenstandes ist nachfolgend anhand der einzigen Zeichnung der Anmeldung, die schematisch eine erfindungsgemässe Vorrichtung zeigt, beschrieben.

Der von einem Kompressor 1 aus einer Zuführleitung 2 angesaugte und komprimierte Normal-Wasserstoff wird in einem Wärmeaustauscher 3 mit eingebauten, nicht gezeichneten, Katalysatoren auf eine unterhalb seiner Inversionstemperatur liegende Temperatur abgekühlt. Das benötigte Kältemittel wird dem Wärmeaustauscher 3 über eine Leitung 4 zugeführt. Der abgekühlte Wasserstoff wird danach in einem Ejektor 5 von Hochdruck auf Flüssigkeitsdruck entspannt und hierbei teilweise verflüssigt. Das Dampf-Flüssigkeitsgemisch durchströmt einen weiteren Wärmeaustauscher 6 und wird dabei weiter gekühlt, so dass mehr flüssiger Wasserstoff gebildet wird, der dann in einem Produktbehälter 7 gesammelt wird. Der Wärmeaustauscher 6 wird vom selben Kältemittel durchströmt wie Wärmeaustauscher 3. Der hergestellte flüssige Wasserstoff, der überwiegend aus Para-Wasserstoff besteht, kann mittels eines Ventils 8 aus dem Behälter 7 entnommen werden. Ein Dampfraum 9 in Behälter 7 steht über eine Leitung 10 mit einer Saugseite 11 des Ejektors 5 in Verbindung. Der Ejektor 5 saugt den Para-Wasserstoffdampf ab, und führt ihn in Form von flüssigem Para-Wasserstoff zum Behälter zurück. Ein Aufwärmen und Zurückverwandeln des Para-Wasserstoffs in Normal-Wasserstoff findet somit nicht statt. In der Saugleitung 10 ist ein Ventil 12 angebracht. Ein Drucksensor 13 steuert das Ventil 12 in Abhängigkeit vom Druck im Dampfraum 9 zwecks Regelung der Temperatur des flüssigen Wasserstoffes im Behälter 7.

## Patentansprüche

1. Vorrichtung zum Herstellen von flüssigem Para-Wasserstoff, mit einem Kompressor (1) zum Komprimieren von Normal-Wasserstoffgas, Kühlmitteln (3) zum Kühlen des komprimierten Wasserstoffgases, Katalysatoren zum Umwandeln des Normalwasserstoffes in Parawasserstoff, einer Entspannungsvorrichtung (5) zum mindestens teilweise Verflüssigen des gekühlten Wasserstoffgases, sowie Kühlmitteln (6) zum Verflüssigen des verbliebenen Wasserstoffdampfes, und einem Behälter (7) für den flüssigen Wasserstoff, dadurch gekennzeichnet, dass die Entspannungsvorrichtung ein Ejektor (5) ist, dessen Saugseite (11) über eine Saugleitung (10) mit dem Gasraum (9) im Behälter verbunden ist.

2. Vorrichtung nach Anspruch 1, dadurch gekennzeichnet, dass die Saugleitung (10) mit einem Ventil (12) versehen ist, das in Abhängigkeit des Druckes im Gasraum (9) des Behälters (7) gesteuert ist.

## Claims

1. Apparatus for producing liquid para-hydrogen, comprising a compressor (1) for compressing normal hydrogen gas; cooling means (3) for cooling the compressed hydrogen gas; catalysts for converting the normal hydrogen into para-hydrogen; an expander (5) for the least partial liquefaction of the cooled hydrogen gas; cooling means (6) for liquefying the residual hydrogen vapour; and a reservoir (7) for the liquid hydrogen, characterized in that the expander is an ejector (5), the suction side (11) thereof communicating via a suction line (10) with the gas space (9) of the reservoir.

2. Apparatus according to claim 1, characterized in that the suction line (10) is provided with a valve (12) which is controlled in response to the pressure in the gas space of the reservoir (7).

**Revendications**

1. Dispositif pour produire du parahydrogène liquide comprenant un compresseur (1) pour comprimer du gaz hydrogène normal, des moyens réfrigérants (3) pour refroidir le gaz hydrogène comprimé, des catalysateurs pour transformer l'hydrogène normal en parahydrogène, un dispositif de détente (5) pour la liquéfaction au moins partielle du gaz hydrogène refroidi, ainsi que des moyens réfrigérants (6) pour liquéfier la vapeur d'hydrogène restante, et un récipient (7) pour l'hydrogène liquide, dispositif caractérisé en ce que le dispositif de détente est un éjecteur (5) dont le côté d'aspiration (11) est relié à l'espace de gaz (9) du récipient par l'intermédiaire d'une conduite d'aspiration (10).

2. Dispositif selon la revendication 1, caractérisé en ce que la conduite d'aspiration (10) est munie d'une soupage (12) qui est commandée en fonction de la pression dans l'espace de gaz (9) du récipient (7).

0 108 834

5